Europäisches Patentamt

(19) European Patent Office    (11) Publication number: **0 193 508**
Office européen des brevets                                **B1**

## EUROPEAN PATENT SPECIFICATION

(45) Date of publication of the patent specification:    (51) Int. Cl.⁴: **H 01 M 2/12**
25.01.89

(21) Application number: **86850060.4**

(22) Date of filing: **20.02.86**

(54) **Battery cap.**

(30) Priority: **21.02.85 NO 850686**

(43) Date of publication of application:
**03.09.86 Bulletin 86/36**

(45) Publication of the grant of the patent:
**25.01.89 Bulletin 89/4**

(84) Designated Contracting States:
**AT BE CH DE FR GB IT LI NL SE**

(56) References cited:
**DE-A-1 511 956**
**FR-A-2 044 681**
**FR-E-80 233**
**GB-A-362 719**
**GB-A-1 290 854**
**US-A-3 124 488**
**US-A-3 141 586**
**US-A-3 578 200**
**US-A-3 992 226**

(73) Proprietor: **FJELD & HALVORSEN A/S, N-2009 Nordby (NO)**

(72) Inventor: **Fjeld, Kristian Alf, Tomterstien 13, N-2009 Nordby (NO)**

(74) Representative: **Rostovanyi, Peter, AWAPATENT AB Box 5117, S-200 71 Malmö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1989

## Description

The present invention is related to a battery cap provided with threads and bleeding means for controlled bleeding of generated gasses.

For batteries, caps og plugs are used in the battery cover thereby providing filling in apertures for liquid as well as bleeding of gasses generated by charging. Plugs without threads are easy to installed, provide, however, a relatively small retaining force against extraction of the plug. Screw caps provide increased retaining force, demanding, however, also increased installing costs. Bleeding of gas pressure normally is accomplished by air apertures directly through the head of the cap.

This solution is unfavourable because undesired material (such as water, dust and dirt) may penetrate into the interior of the cap and acid may penetrate out from the interior. The apertures also may be plugged by dust, thereby hampering bleeding. Sofisticated caps are available on the market, comprising a variety of one way bleeding valve systems. Common for such systems is, however, their complexity as they comprise more than one component and therefore are expensive to manufacture.

The use of the battery cap according to the present invention, provided with threads and controlled bleeding, ensures a screw cap having a high retaining force against extraction. The battery cap furthermore ensures easy and quick installation, a safe and controllable one way bleeding, without any risk for plugging. Liquid will not penetrate from the interior of the cap and the cap can be produced at a low cost.

The above-mentioned advantages may be achieved with the battery cap according to the invention as stated in the characterizing clauses of the patent claims.

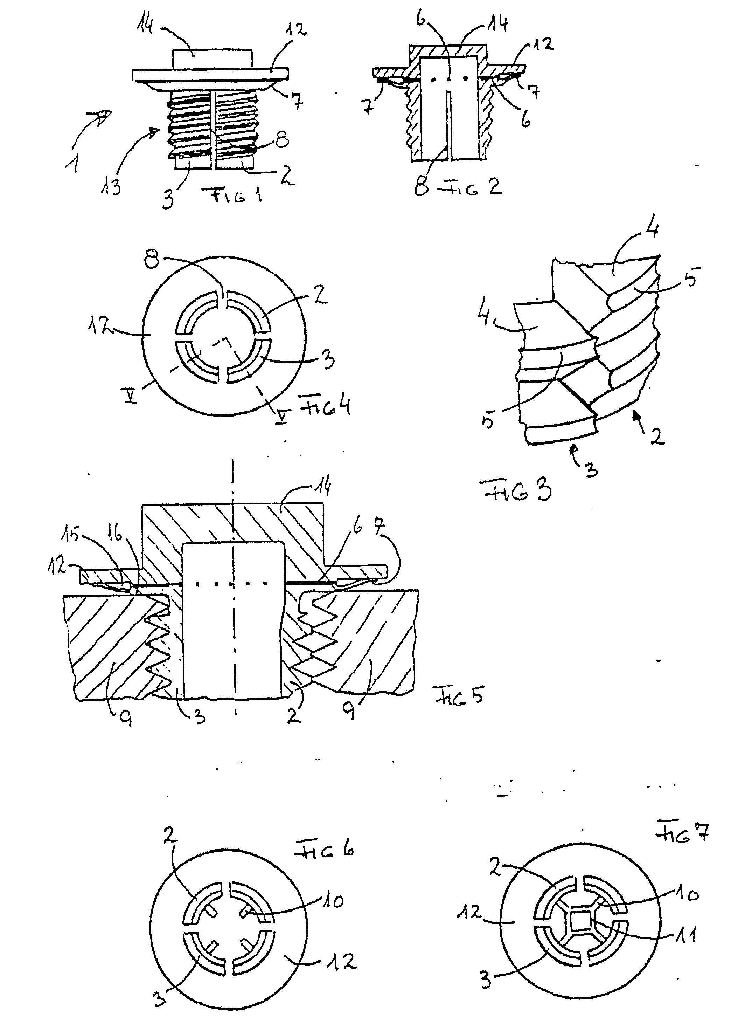

The invention is described by an embodiment as disclosed in the drawings where Figure 1 is an elevational view of a battery cap according to the invention, Figure 2 discloses an axial section through the cap, Figure 3 is a fragmentary view of the threads on two adjacent parts, Figure 4 is an elevation from below of the cap, Figur 5 is an axial section taken along V - V on Figure 4 and Figures 6 and 7 are elevations similar to Figure 4, of the embodiments of the threaded portion of the cap.

One embodiment of the battery cap according to the invention is disclosed in Figures 1 - 5, whereas embodiments of a web system in the threaded portion of the cap are disclosed in Figures 6 and 7.

A battery cap 1 according to the invention comprises a threaded portion 13, a flange 12 and a cap head 14. The threaded portion 13 is axially divided into four parts, or a multiple there of, each of which being angularly equally. Diametrically opposed parts being identical, where as adjacent parts 2 and 3 having threads being offset one half lead in relation to each other. Diametrically opposed parts 2 thereby having corresponding threads and adjacent parts 3 having also corresponding threads, however offset as opposed to the threads on parts 2. The tip 5 of each thread 4 being concave, substantially corresponding to the tip of the corresponding threads in the battery cover 9.

Between the different parts 2 and 3 of the threaded portion 13 a narrow split 8 is arranged, extending axially along the interior threaded portion 13.

Below the flange 12 a lip 7 is provided, being biassed against the underside of the flange 12, the lip thereby extending radially inwardly from the sircumferential part of the flange 12 at a distance from the flange, thereby creating an annular chamber 15 between the flange 12 and the lip 7. From the annular chamber 15 a plurality of narrow passages 16 extend radially to the interior of the cap. The passages 6 thereby being equally distributed along the sircumference. The passages 6 furthermore having a cross section smaller than the minimum cross section through which fire can be transmitted.

By installation, the battery cap according to the invention is pressed into the corresponding hole in the battery cover 9, the different parts 2 and 3 of the threaded portion 13 thereby resiliently yielding until a shoulder 16 is landing on the surface of the battery cover 9, the shoulder 16 thereby being adapted to resiliently yield by pressure on the cap in such a way that the shoulder 16 will be biassed against the battery cover 9. The battery cap 1 additionally may be twisted to ensure great pressure between the cap and the cover. This twisting, however, is normally not necessary.

After the cap has been pressed into the cover hole, which situation is disclosed in Figure 5, the threads in part 3 will mesh with the threads in the battery cover 9. The offset threads on parts 2 thereby will resiliently press against the lead tips of the cover, whereby the lead tips 5 of the threads on parts 2 will press against the tips of the cover leads.

The pressure from the threads on parts 3 and parts 2 secure the cap 1 to the battery cover 9. Additionally the force from the resilient shoulder 16 will contribute to this action.

Due to the gasses generated in the interior of the battery, the pressure inside the cap 1 may increase, which pressure, due to the passages 6, also will exist in the annular chamber 15. When the pressure in the chamber 15 increases to a predetermined pressure, the lip 7 or part of the lip, will lift from the underside of the flange 12 and bleed the excess pressure, whereafter the lip 7 will close against the underside of the flange 12 due to it's inherent resiliency. The predetermined opening pressure is achieved by the configuration of the lip 7 and the shoulder 12.

Due to the fact that the lip 7 permanently is biassed against the underside of the flange 12, dirt, dust, water etc. cannot penetrate into the annular chamber 15, nor into the interior of the cap 1. Furthermore the configuration of the lip 7, the flange 12 as well as the passages 6 have a fire retardent effect, practically being fire proof.

To give the parts 2 and 3 additional resiliency, axially extending ribs may be arranged on the innerside of the parts 2 and 3. For further increasment of this resiliency, webs 11 may be arranged to connect the ribs.

In a further embodiment the lip 7 may be provided on the shoulder 16 of the embodiment disclosed in Figure 5, the lip 7 thereby being pressed against the underside of the flange 12 by the pressure excerted on the cap 1 by installation.

## Claims

1. Battery cap provided with threads and bleeding means for controlled bleeding of generated gasses, characterized in the threaded portion of the cap being radially divided into a pluralily of equal parts, the plurality thereby being a multiple of 4, thereby the threads of one part being axially offset by 1/2 lead in relation to the threads of the adjacent part.

2. Batter car according to claim 1, characterized in the bleeding means comprising a lip being biassed against the underside of the cap flange and at least one aperture extending radially from the interior of the cap to an annular chamber defined by the underside of the flange and the lip.

3. Battery cap according to claim 1, characterized in the thread tips being concave.

4. Battery cap according to claim 1 and 3, characterized in the inherent outwardly directed biassing force of the parts being increased by an axially extending rib on the inner side of each part.

5. Battery cap according to claim 4, characterized in the ribs of different parts being connected by connecting webs.

6. Battery cap according to claim 2, characterized in the lip being biassed against the flange with a force allowing the lips or part of the lips, to lift from the flange at a predetermined internal pressure in the annular chamber and the interior of the cap, thereby bleeding the interior pressure.

7. Battery cap according to claim 2, characterized in the passages having a cross section with a diameter less than 0,5 mm, preferably 0,3 mm, thereby ensuring the passages to be fire proof.

8. Battery cap according to claims 1 - 7, charaterized in the cap being produced in one integrated part.

## Patentansprüche

1. Batteriedeckel, der mit Gewinde und mit Entlüftungseinrichtungen zum gesteuerten Entlüften entwickelter Gase versehen ist, dadurch gekennzeichnet, daß der Gewindeabschnitt des Deckels radial in mehrere gleiche Teile unterteilt ist, wobei die Anzahl derselben ein Multiples von 4 ist, wodurch die Gewindegänge des einen Teils axial um einen halben Gewindegang in bezug auf die Gewindegänge des benachbarten Teils versetzt sind.

2. Batteriekappe nach Anspruch 1, dadurch gekennzeichnet, daß die Entlüftungseinrichtung eine Lippe enthält, die gegen die Unterseite des Deckelflansches vorgespannt ist, und weiterhin wenigstens eine Öffnung aufweist, die sich radial vom Innenraum des Deckels in eine ringförmige Kammer erstreckt, die durch die Unterseite des Flansches und der Lippe gebildet wird.

3. Batteriedeckel nach Anspruch 1, dadurch gekennzeichnet, daß die Gewindescheitel konkav sind.

4. Batteriedeckel nach Anspruch 1 und 3, dadurch gekennzeichnet, daß die innewohnende, nach außen gerichtete Vorspannungskraft der Teile durch eine axial erstreckte Rippe auf der Innenseite eines jeden Teils gesteigert ist.

5. Batteriedeckel nach Anspruch 4, dadurch gekennzeichnet, daß die Rippen der verschiedenen Teile durch Verbindungsstege miteinander verbunden sind.

6. Batteriedeckel nach Anspruch 2, dadurch gekennzeichnet, daß die Lippe gegen den Flansch mit einer Kraft vorgespannt ist, die es ermöglicht, daß die Lippen oder ein Teil der Lippen von dem Flansch bei einem vorbestimmten Innendruck in der ringförmigen Kammer und im Inneren der Kappe abhebt, um dadurch den Innendruck abzulassen.

7. Batteriedeckel nach Anspruch 2, dadurch gekennzeichnet, daß die Durchlässe einen Querschnitt eines Durchmessers von veniger als 0,5 mm, bevorzugt 0,3 mm aufweisen, um dadurch sicherzustellen, daß die Durchlässe feuersicher sind.

8. Batteriedeckel nach den Ansprüchen 1 bis 7, dadurch gekennzeichnet, daß der Deckel als integrales Teil hergestellt ist.

## Revendications

1. Bouchon d'accumulateur muni de filets de vis et de moyens de fuite pour l'échappement réglé des gaz dégagés, caractérisé en ce que la partie filetée du bouchon est divisée radialement en un certain nombre de parties égales, le nombre étant un multiple de quatre, les filets d'une partie étant décalés axialement d'un demi-pas par rapport aux filets de la partie adjacente.

2. Bouchon d'accumulateur selon la revendication 1, caractérisé en ce que les moyens de fuite comprennent une lèvre pressée contre la face inférieure d'une collerette du bouchon et au moins une ouverture qui s'étend radialement du volume intérieur du bouchon à une chambre annulaire définie par la face intérieure de la collerette et par la lèvre.

3. Bouchon d'accumulateur selon la revendication 1, caractérisé en ce que les sommets des filets sont concaves.

4. Bouchon d'accumulateur selon la revendications 1 et 3, caractérisé en ce que la force de sollicitation inhérente des parties qui est dirigée vers l'extérieur, est renforcée par une nervure axiale prévue sur la face interne de chaque partie.

5. Bouchon d'accumulateur selon la revendication 4, caractérisé en ce que les nervures des différentes parties sont reliées par des voiles de liaison.

6. Bouchon d'accumulateur selon la revendication 2, caractérisé en ce que la lèvre est pressée contre la collerette avec une force telle que les lèvres ou des parties des lèvres s'écartent de la collerette en réponse à une pression interne prédéterminée règnant dans la chambre annulaire et dans le volume intérieur du bouchon, pour laisser ainsi échapper la pression intérieure.

7. Bouchon d'accumulateur selon la revendication 2, caractérisé en ce que les passages ont une section d'un diamètre inférieur à 0,5 mm, de préférence de 0,3 mm, pour rendre ainsi les passages anti-déflagrants.

8. Bouchon d'accumulateur selon les revendications 1 à 7, caractérisé en ce que le bouchon est fabriqué en une seule pièce.

Fig 1

Fig 2

Fig 4

Fig 3

Fig 5

Fig 6

Fig 7